# EUROPEAN PATENT APPLICATION

(11) **EP 3 836 063 A1**
(43) Date of publication of application: **16.06.2021**
(21) Application number: 19847860.4
(22) Date of filing: 05.08.2019
(51) Int. Cl.: G06Q 30/02

(54) **SYSTEM FOR PROVIDING ADVERTISEMENT INFORMATION PLATFORM SERVICE USING BLOCK CHAIN**

(30) Priority: 06.08.2018 KR 20180091063
(71) Applicant: Ha, Sung Nam, Seoul 04500 (KR)
(72) Inventor: Ha, Sung Nam, Seoul 04500 (KR)
(74) Representative: M. Zardi & Co S.A.
(86) International application number: PCT/KR2019/009698
(87) International publication number: WO 2020/032499

(57) **Abstract**

Disclosed is provided a system for providing an advertisement information platform service using a block chain. The system includes: a member terminal configured to allow each member to subscribe for membership, to display advertisement information, to generate authentication information, and to receive or pay an information consumption fee corresponding to a predetermined proportion; an advertisement platform server configured to allow advertisement information to be registered, to select defective advertisement information and non-defective advertisement information from, to remove only the defective advertisement information, and to transmit only the non-defective advertisement information; a member management server configured to operate in conjunction with the member terminal and the advertisement platform server, to store member information and the advertisement information, and to generate an information consumption fee request signal; and a financial server configured to receive the information consumption fee request signal, and to pay the information consumption fee to the member terminal.

## Description

### Technical Field

The present invention relates to a system for providing an advertisement information platform service using a block chain, and more particularly to a system for providing an advertisement information platform service using a block chain, which classifies and provides advertisement information for various fields, verifies the transparency of advertisement information by applying a block chain, provides only transparent advertisement information, reduces advertisement expenses, incurred by unilaterally providing advertisement fees to unspecified multiple persons, by paying an advertisement fee only when consumption is performed, and also pays an information consumption fee corresponding to a predetermined proportion to a member who has used advertisement information.

### Background Art

Today various types of information are provided through the Internet or mobile. However, among the above pieces of information, only a small number of pieces of information guarantee reliability. In particular, in the case of advertisements, hype advertisements, exaggerated advertisements, or information processed for purposes are distorted and disseminated, or are unilaterally instilled into consumers.

In particular, necessary information in a specific field, such as medical care or law, or advertisement information is not provided by a third party, but is mostly processed by related parties in the field. Not only are consumers difficult to find corresponding information, but it is also difficult to trust the information they find.

Meanwhile, in general, a lot of goods and time are consumed to disseminate information or find useful information. Distributors who have disseminated the information are difficult to ascertain the effect of dissemination, and consumers who seek information do not receive any compensation even when they perform consumption only via unilateral information.

Accordingly, Korean Patent No. 10-1217142 discloses an interactive mobile advertising platform including a wired/wireless linkage income capitalization advertising method and its advertising method that allow payback points to be automatically accumulated when a user selects an advertisement registered by an advertiser through a mobile advertisement platform and stores it in the user's own mobile advertisement platform or watches an advertisement automatically received for a certain period of time, can increase the reach rate and effectiveness of advertisements when and an advertiser performs an advertisement, enable customized targeting mobile advertisements for customers, allow an advertiser to accurately calculate effects, and allow advertising expenses to be paid because an advertiser can specify advertising targets, such as a country, a region and a sub-region, an age and a gender, a date and a time, a location, an occupation, and a hobby for advertising, and the amount of advertising money.

Furthermore, Korean Patent Application Publication No. 10-2018-0061784 discloses a server and method for providing a mobile advertising platform that motivate a user to receive advertisement content by allocating a reserve corresponding to the advertisement content when the user receives the advertisement content through a user terminal.

However, according to the aforementioned prior art documents, they are intended merely to provide advertisement information to users. In particular, a problem arises in that advertising efficiency compared to an advertising cost is deteriorated because separate advertising costs are incurred for advertisers providing the advertisement information or an excessive advertising cost is incurred according to a user's advertisement use rate.

Furthermore, a user (consumer) side has no choice but to use advertisement information in a state where the reliability of the provided advertisement information cannot be verified. In particular, since it is difficult for consumers to categorize advertisers that provide hype advertisements, they are bound to receive repetitive damage from bad companies that provide false, hype, and exaggerated advertisements. Not only the advertising companies that have provided the advertisement information but also the advertising platforms have the problem of losing reliability.

### Disclosure

### Technical Problem

The present invention has been conceived to overcome the above-described problems, and an object of the present invention is to provide a system for providing an advertisement information platform service using a block chain, which classifies and provides advertisement information for various fields and verifies the transparency of advertisement information by applying a block chain, thereby selecting and weeding out defective companies that provide false, hype and exaggerated advertisements, so that only transparent advertisement information can be provided.

Furthermore, an object of the present invention is to provide a system for providing an advertisement information platform service using a block chain, which pays an information consumption fee in cash or cryptocurrency when a member performs consumption via advertisement information posted on a member terminal and provides authentication information such as a customer review message for the advertisement information, thereby enabling members to perform more active activities.

Furthermore, an object of the present invention is to provide a system for providing an advertisement information platform service using a block chain, which reduces advertisement expenses incurred by unilaterally providing advertisement fees to unspecified multiple users because an advertiser pays an advertisement fee only when consumption is performed and checks the reliability of advertisement information of members because advertising expenses are incurred in proportion to the consumption of the members.

Moreover, an object of the present invention is to provide a system for providing an advertisement information platform service using a block chain, which enables existing members to attract new members and allows part of information consumption fees incurred by the new members to be paid to the existing members, thereby increasing the loyalty of the members and thus minimizing the churn rate of the members.

### Technical Solution

In order to accomplish the above objects, according to an embodiment of the present invention, there is provided a system for providing an advertisement information platform service using a block chain, the system including: a member terminal configured to allow each member, including an advertisement consumer and a general consumer, to subscribe for membership, to display advertisement information registered by the advertisement consumer, to generate authentication information for the use of the advertisement information, and to receive or pay an information consumption fee corresponding to a predetermined proportion upon generation of the authentication information; an advertisement platform server configured to allow advertisement information included in an advertisement information registration request signal to be registered when the advertisement information registration request signal is transmitted from the member terminal, to select defective advertisement information and non-defective advertisement information from the registered advertisement information by using a block chain, to remove only the defective advertisement information, and to transmit only the non-defective advertisement information to the member terminal; a member management server configured to operate in conjunction with the member terminal and the advertisement platform server, to store information about the member and the advertisement information, and to generate an information consumption fee request signal so that an information consumption fee is paid to the member terminal upon reception of the authentication information; and a financial server configured to receive the information consumption fee request signal from the member management server, and to pay the information consumption fee to the member terminal.

According to an embodiment of the present invention, the advertisement consumer may play the role of an advertiser who registers advertisement information for any one field, or additionally play the role of a consumer who uses advertisement information in all fields including the any one field.

According to an embodiment of the present invention, the member terminal may include: a subscription guide unit configured to guide the member through subscription for membership, to generate an advertisement information registration request signal adapted to register advertisement information, and to transmit the advertisement information registration request signal to the member management server; an advertisement information display unit configured to display advertisement information corresponding to the advertisement information registration request signal while operating in conjunction with the advertisement platform server; a consumption authentication unit configured to, upon use of the advertisement information, generate authentication information including a service use payment completion signal and a consumer review message for the advertisement information and transmit the authentication information to the member management server, and to pay information consumption fee corresponding to a predetermined proportion corresponding to the authentication information or receive the information consumption fee corresponding to the predetermined; and an advertisement and consumption information provision unit configured to classify the member as a member having registered the advertisement information or a member using the registered advertisement information, and to receive advertisement list information and information consumption fee list information from the member management server according to status of the classified member.

According to an embodiment of the present invention, the advertisement platform server may include: an advertisement information registration unit configured to receive an advertisement information registration request signal while operating in conjunction with the member terminal, and to transmit advertisement information included in the advertisement information registration request signal and payment proportion information for an information consumption fee calculated by the member management server;
an advertisement information classification unit configured to, upontransmission of the advertisement information registration request signal, analyze a category of the advertisement information and arrange the advertisement information according to a result of the analysis of the category; an advertisement information selection unit configured to select the advertisement information, classified by the advertisement information classification unit, as defective advertisement information or non-defective advertisement information by using a block chain; and an advertisement information platform provision unit configured to arrange the non-defective advertisement information in the category, and to provide the arranged non-defective advertisement information to the member terminal.

According to an embodiment of the present invention, the member management server may include: a member information management unit configured to generate the information consumption fee request signal, and to provide advertisement list information and information consumption fee list information upon a request from the member terminal; an information consumption fee management unit configured to calculate the payment proportion for the information consumption fee, and to transmit the information consumption fee request signal to the financial server; and a database configured to store information and data transmitted from the member information management unit and the information consumption fee management unit.

According to an embodiment of the present invention, the member information management unit may be configured to allow the existing member to attract a new member, to generate subscription attraction fee information so that a predetermined proportion of an information consumption fee to be paid when the new member uses advertisement information is paid to the existing member having attracted the new member, and to transmit the generated subscription attraction fee information to the financial server so that the predetermined proportion of the information consumption fee is paid to the member terminal of the member having attracted the new member.

### Advantageous Effects

According to an embodiment of the present invention, advertisement information is classified and provided for various fields and the transparency of advertisement information is verified by applying a block chain, so that defective companies that provide false, hype and exaggerated advertisements are selected and weeded out and thus only transparent advertisement information can be provided, thereby providing the effect of improving the reliability of advertisement information.

Furthermore, according to an embodiment of the present invention, an information consumption fee in cash or cryptocurrency is paid when a member performs consumption via advertisement information posted on a member terminal and provides authentication information such as a customer review message for the advertisement information, thereby providing the effect of inducing members to perform more active activities.

Furthermore, according to an embodiment of the present invention, there are provided the effects of reducing advertisement expenses incurred by unilaterally providing advertisement fees to unspecified multiple users because an advertiser pays an advertisement fee only when consumption is performed and checking the reliability of advertisement information of members because advertising expenses are incurred in proportion to the consumption of the members.

Moreover, according to an embodiment of the present invention, existing members are enabled to attract new members and part of information consumption fees incurred by the new members is allowed to be paid to the existing members, thereby providing the effect of increasing the loyalty of the members and thus minimizing the chum rate of the members.

In addition, various and beneficial advantages and effects of the present invention are not limited to the above-described advantages and effects, and will be more easily understood in the course of describing specific embodiments of the present invention.

### Description of Drawings

FIG. 1 is a block diagram schematically showing a system for providing an advertisement information platform service using a block chain according to an embodiment of the present invention;
FIG. 2 is a block diagram showing a member terminal of the system for providing an advertisement information platform service using a block chain according to the embodiment of the present invention;
FIG. 3 is a block diagram showing the advertisement platform server of the system for providing an advertisement information platform service using a block chain according to the embodiment of the present invention;
FIG. 4 is a block diagram showing the member management server of the system for providing an advertisement information platform service using a block chain according to an embodiment of the present invention; and
FIGS. 5 to 7 are views showing examples of screens showing a state in which advertisement information is displayed via an advertisement platform server according to an embodiment of the present invention.

### Best Mode

A system for providing an advertisement information platform service using a block chain includes:
a member terminal configured to allow each member, including an advertisement consumer and a general consumer, to subscribe for membership, to display advertisement information registered by the advertisement consumer, to generate authentication information for the use of the advertisement information, and to receive or pay an information consumption fee corresponding to a predetermined proportion upon generation of the authentication information;
an advertisement platform server configured to allow advertisement information included in an advertisement information registration request signal to be registered when the advertisement information registration request signal is transmitted from the member terminal, to select defective advertisement information and non-defective advertisement information from the registered advertisement information by using a block chain, to remove only the defective advertisement information, and to transmit only the non-defective advertisement information to the member terminal;
a member management server configured to operate in conjunction with the member terminal and the advertisement platform server, to store information about the member and the advertisement information, and to generate an information consumption fee request signal so that an information consumption fee is paid to the member terminal upon reception of the authentication information; and
a financial server configured to receive the information consumption fee request signal from the member management server, and to pay the information consumption fee to the member terminal.

### Mode for Invention

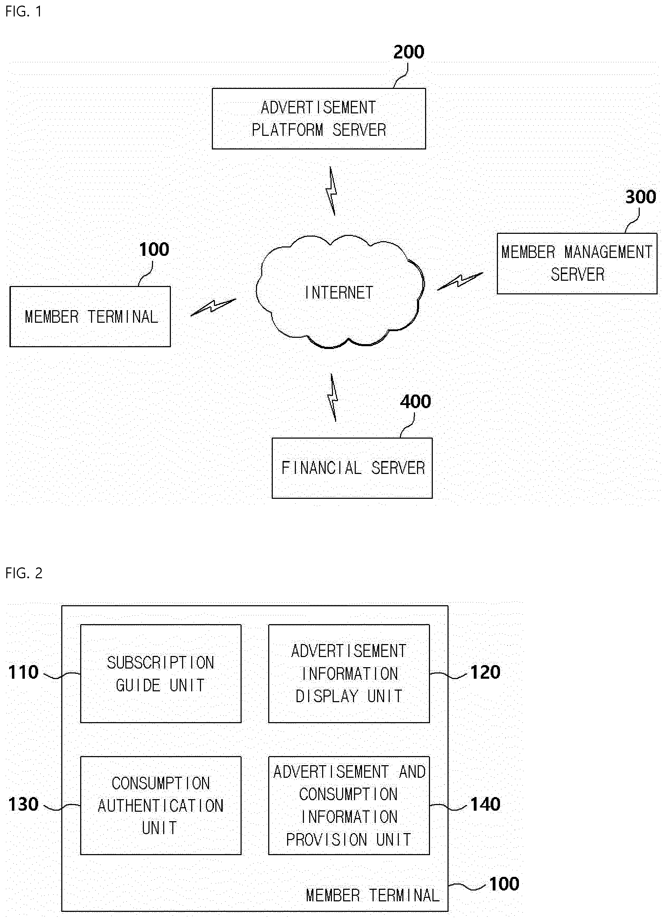

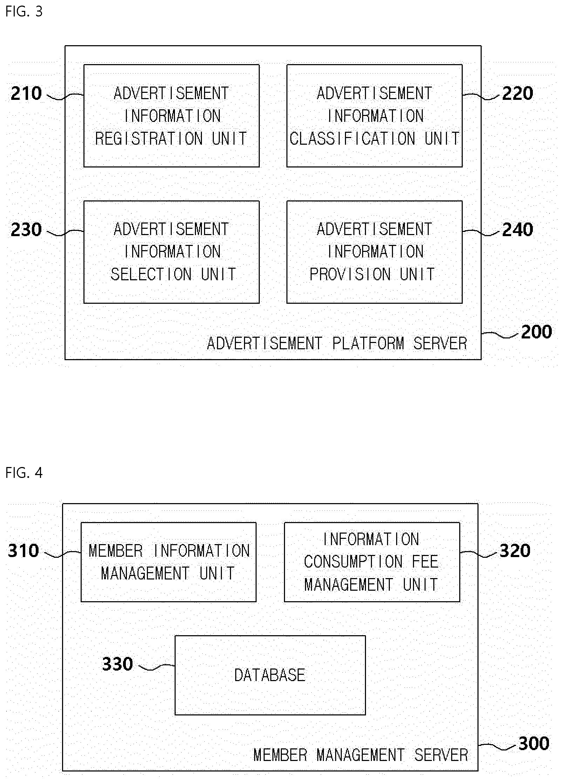

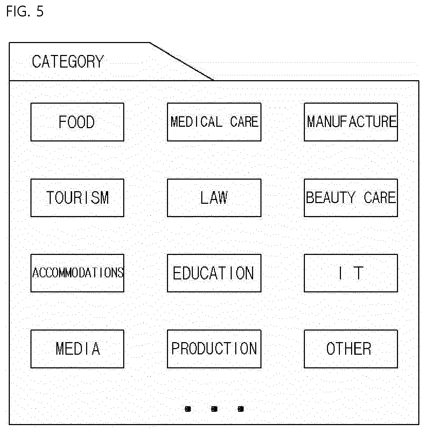

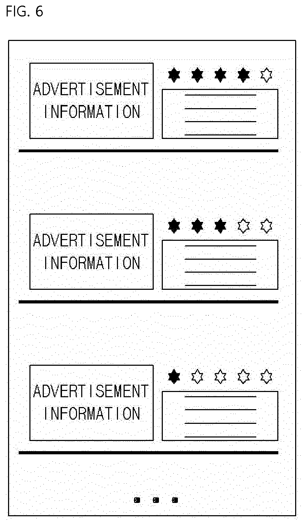

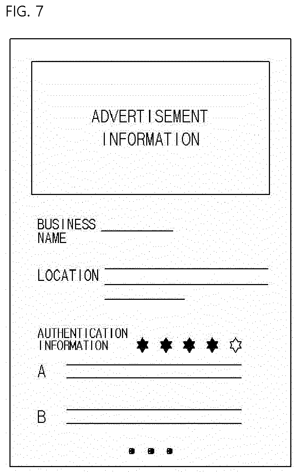

FIG. 1 is a block diagram schematically showing a system for providing an advertisement information platform service using a block chain according to an embodiment of the present invention, FIG. 2 is a block diagram showing a member terminal of the system for providing an advertisement information platform service using a block chain according to the embodiment of the present invention, FIG. 3 is a block diagram showing the advertisement platform server of the system for providing an advertisement information platform service using a block chain according to the embodiment of the present invention, FIG. 4 is a block diagram showing the member management server of the system for providing an advertisement information platform service using a block chain according to an embodiment of the present invention, and FIGS. 5 to 7 are views showing examples of screens showing a state in which advertisement information is displayed via an advertisement platform server according to an embodiment of the present invention.

As shown in the drawings, the system for providing an advertisement information platform service using a block chain according to the present invention includes: a member terminal 100 configured to provide advertisement information in various categories to a member; an advertisement platform server 200 configured to register the advertisement information and transmit advertisement information, excluding defective advertisement information selected from the registered advertisement information by using a block chain, to the member terminal 100; a member management server 300 configured to store the member and advertisement information and pay a predetermined information consumption fee attributable to consumption via the advertisement information; and a financial server 400 configured to pay the information consumption fee to the member terminal 100.

The member terminal 100 includes: a subscription guide unit 110 configured to allow members including advertisement consumers and general consumers to subscribe for membership; an advertisement information display unit 120 configured to operate in conjunction with the advertisement platform server 200 and display advertisement information transmitted from the advertisement platform server 200; a consumption authentication unit 130 configured to, when the member consumes via the advertisement information, generate authentication information for the consumption; and an advertisement and consumption information provision unit 140 configured to check the authentication information generated through the consumption authentication unit 130 and check an information consumption fee attributable to the generation of the authentication information.

The subscription guide unit 110 guides users who will use the system for providing an advertisement platform service according to the present invention through membership subscription, and guides members upon membership subscription so that the members are classified into members as advertisement consumers and members as general consumers and then subscribe for membership.

In other words, the member terminal 100 of the present invention may include a member terminal for an advertisement consumer and a member terminal for a general consumer according to the type of consumer identified by the subscription guide unit 110.

Furthermore, the subscription guide unit 110 is configured to, when a subscribed member is an advertisement consumer, generate an advertisement information registration request signal for the registration of advertisement information and transmit the advertisement information registration request signal to the advertisement information registration unit 210 to be described later.

In this case, the advertisement consumer refers to a consumer who plays the role of an advertiser who registers advertisement information for a specific field or plays the role of a consumer who uses all types of advertisement information including information in a specific field. The general consumer refers to a consumer who simply uses the advertisement information but does not register additional advertisement information.

As an example, in the present invention, when a member acting as an advertisement consumer is a restaurant business owner who wishes to register advertisement information for a specific field such as a restaurant, the advertisement information for the restaurant is registered. At the same time, when an advertisement consumer performs consumption via advertisement information belonging to a category other than a category including the restaurant, the advertisement consumer may receive a predetermined information consumption fee for the consumption like a general consumer.

In other words, a member who has registered advertisement information for a specific field (for example, a restaurant field) may also be a payer who pays an information consumption fee attributable to the use of advertisement information. At the same time, the member may be a payee who receives an information consumption fee while using another piece of advertisement information in the category corresponding to the advertisement information or advertisement information registered in a category for another field.

Furthermore, when the user is an advertisement consumer, the subscription guide unit 110 may allow a payment proportion corresponding to an information consumption fee attributable to the consumption of advertisement information, to be registered in the advertisement platform server 200, to be selected upon subscription for membership.

In this case, the payment proportion corresponding to the information consumption fee may be the proportion determined by the information consumption fee management unit 320 of the member management server 300 to be described later, and the advertisement consumer may check and select a predetermined proportion.

When the subscription of the users for membership is completed, the subscription guide unit 110 transmits and stores member subscription information to and in the database 330 of the member management server 300 so that the users are given the qualification as a member as an advertisement consumer or as a member as a general consumer.

The advertisement information display unit 120 is a component configured to operate in conjunction with the advertisement information provision unit 240 of the advertisement platform server 200 and display advertisement information transmitted from the advertisement information provision unit 240.

In this case, the advertisement information corresponds to advertisement information registered by a plurality of advertisement consumers through the display unit of the member terminal 100, and corresponds to advertisement information that is selected by an advertisement information selection unit 230 to be described later.

Furthermore, the advertisement information display unit 120 is configured to display detailed information about advertisement information selected by the member.

The consumption authentication unit 130 is a component configured to, when consumption is performed via advertisement information selected by the member through the advertisement information display unit 120, generate a consumption authentication signal and transmit the consumption authentication signal to the member management server 300 to be described later so that the member can receive an information consumption fee corresponding to a predetermined proportion of the amount of money consumed.

The consumption authentication unit 130 checks the detailed information of the advertisement information selected by the member, generates a service use signal for a company corresponding to the advertisement information in order to receive a service for the advertisement information based on the result of the checking, and transmits the resulting service use signal to the member information management unit 310 of the member management server 300.

Furthermore, the consumption authentication unit 130 is configured to, upon payment of a service use fee for the advertisement information, generate a service use payment completion signal and transmit it to the member information management unit 310.

In this case, when the service use payment completion signal is transmitted, the member information management unit 310 generates a use confirmation signal confirming that the use of the advertisement information selected by the member has been made and transmits the use confirmation signal to the consumption authentication unit 130. The consumption authentication unit 130 guides the member to write a review message for an advertisement information use result according to whether or not the use confirmation signal is received, and, when the writing of the user review message is completed, generates authentication information including the service use payment completion signal and a customer review message and transmits the authentication information to the member information management unit 310 so that the payment of an information consumption fee corresponding to the authentication information is made.

In other words, the present invention is configured to, when a member performs consumption via advertisement information displayed on the advertisement information display unit 120, immediately pay an information consumption fee in cash or cryptocurrency based on authentication information therefor. The advertisement consumer pays an information consumption fee corresponding to an advertisement fee only when consumption is performed via the advertisement information, and a general consumer may receive a predetermined proportion of the information consumption fee when consumption is performed via the advertisement information. Accordingly, advertising expenses that are incurred by unilaterally providing them to unspecified multiple persons. As advertising fees are incurred in proportion to the members' consumption, it may be possible to check the members' loyalty to advertising information.

Meanwhile, the consumption authentication unit 130 may provide a conventional payment service using wireless communication so that the service usage fee for the advertisement information is paid, but is not limited thereto.

The advertisement and consumption information provision unit 140 is a component configured to classify each member as a member having registered the advertisement information or a member having used the registered advertisement information while operating in conjunction with the member information management unit 310 of the member management server 300 and provide advertisement list information and information consumption fee list information according to the classified member statuses.

In other words, a configuration may be made such that when a member having registered the advertisement information requests advertisement list information, information on the current state of the registered advertisement information, such as information about whether the registered advertisement information is used, whether authentication information is generated, and the checking of generated authentication information, may be provided through the advertisement platform server 200.

Furthermore, a configuration may be made such that when the member having registered the advertisement information requests the information consumption fee list information, information about information consumption fees paid according to the use of the registered advertisement information may be provided through the advertisement platform server 200.

Additionally, a configuration may be made such that when the member is a general consumer, advertisement list information is provided such that advertisement information used in the advertisement information displayed through the advertisement information display unit 120 can be checked, and the consumption fee list information, including the accumulated status of information consumption fees paid for the use of the advertisement information and usage details, is provided.

Furthermore, the advertisement and consumption information provision unit 140 may be configured to modify and delete a customer review message in the authentication information generated by the member.

The advertisement platform server 200 is configured to, when an advertisement information registration request signal is transmitted from the member terminal 100 of a member who is an advertisement consumer among the members, allow the advertisement information included in the advertisement information registration request signal to be registered, select bad advertisement information and non-defective advertisement information from the advertisement information by using a block chain, remove only bad advertisement information, and transmit only non-defective advertisement information to the advertisement information display unit 120 of the member terminal 100. The advertisement platform server 200 includes an advertisement information registration unit 210, an advertisement information classification unit 220, an advertisement information selection unit 230, and an advertisement information provision unit 240.

The advertisement information registration unit 210 receives an advertisement information registration request signal while operating in conjunction with the subscription guide unit 110, and stores the advertisement information included in the advertisement information registration request signal and the information consumption fee payment proportion information to be described later in the database 330 and also transmits the advertisement information and the information consumption fee payment proportion information to the advertisement information classification unit 220.

Furthermore, when the advertisement information registration request signal is transmitted, the advertisement information registration unit 210 calculates a payment proportion corresponding to the information consumption fee for the advertisement information to be registered, and transmits information about the calculated payment proportion corresponding to the information consumption fee to the member terminal 100 that has generated and transmitted the advertisement information registration request signal.

In this case, the advertisement information registration unit 210 may calculate the information consumption fee payment portion information differently for each category classified by the advertisement information classification unit 220 when generating the information consumption fee payment portion information. The calculation criterion may be determined according to the number of pieces of existing advertisement information already arranged in each category, but is not limited thereto.

The advertisement information classification unit 220 is configured to, when the advertisement information to be registered is transm itted through the advertisement information registration unit 210, analyze the category of the advertisement information and arrange the advertisement information according to the analyzed category result.

In this case, the arrangement of advertisement information may correspond to the display location of advertisement information displayed through the advertisement information display unit 120.

In other words, the advertisement information classification unit 220 of the present invention categorizes and displays the advertisement information by category according to the type of advertisement information to be registered. Accordingly, it may possible to classify and provide advertisement information for various fields without providing advertisement information limited to a specific field, and thus wider membership subscription is induced, thereby further maximizing the influx of consumers who will use advertisement information.

In this case, the advertisement information classification unit 220 of the present invention may be configured to set advertisement categories for all industries or for all occupations or jobs without setting a category limited to a specific field. In particular, in a field in which consumption can be performed through advertisement information, a new category may be created regardless of industries, occupations, and jobs.

The advertisement information selection unit 230 verifies whether the advertisement information classified by the advertisement information classification unit 220 is defective, prevents the advertisement information from being displayed through the advertisement information display unit 120 when as a result of the verification, it is determined that the advertisement information is defective advertisement information, and allows only non-defective advertisement information to be displayed through the advertisement information display unit 120, thereby improving the reliability of the advertisement information displayed through the advertisement information display unit 120 and thus increasing the satisfaction of the members' consumption.

In this case, the defective advertisement information is advertisement information corresponding to hype, false, or exaggerated advertisement, or advertisement information in which the evaluation result of customer review message information included in authentication information is lower than an average evaluation result value by a predetermined value.

Furthermore, the advertisement information selection unit 230 is configured to transmit only the verified non-defective advertisement information to the advertisement information providing unit 240 so that the non-defective advertisement information is displayed through the advertisement information display unit 120 of the member terminal 100.

It is preferable that the advertisement information selection unit 230 is configured to select defective advertisement information and non-defective advertisement information by verifying the advertisement information using a block chain.

Accordingly, the present invention verifies the transparency of advertisement information by applying a block chain, thereby selecting and weeding out defective companies that provide false, hype and exaggerated advertisements, so that only transparent advertisement information will be provided to the members.

The advertisement information platform provision unit 240 is a component configured to arrange the non-defective advertisement information, verified through the advertisement information selection unit 230, in the categories classified by the advertisement information classification unit 220 and display the arranged non-defective advertisement information in conjunction with the advertisement information display unit 120.

The member management server 300 operates in conjunction with the financial server 400 so that a predetermined information consumption fee can be paid when the member information and advertisement information are stored and the authentication information generated when the advertisement information is consumed is transmitted. The member management server 300 includes a member information management unit 310, an information consumption fee management unit 320, and a database 330.

When a service use payment completion signal is transmitted from the consumption authentication unit 130, the member information management unit 310 stores the service use payment completion signal in the database 330, generates a usage confirmation signal, and transmits the usage confirmation signal to the consumption authentication unit 130, thereby allowing a customer review message based on the use of the service to be written.

Furthermore, when the authentication information consisting of either or both of the service use payment completion signal and the customer review message is transmitted from the consumption authentication unit 130, the member information management unit 310 stores the authentication information in the database 330, generates an information consumption fee request signal requesting the payment of an information consumption fee corresponding to the authentication information, and transmits the information consumption fee request signal to the information consumption fee management unit 320.

Additionally, the member information management unit 310 is configured to provide advertisement list information, including the advertisement information stored in the database 330 in response to a request from the advertisement and consumption information provision unit 140 and registered by the members or the advertisement information used by the members, and information consumption fee list information including the cumulative states and use details of the information consumption fees paid due to the use of the registered advertisement information and information consumption fees paid each time the advertisement information is used.

Meanwhile, the member information management unit 310 of the present invention generates subscription attraction fee information so that a new member can be attracted by an existing member and a specific percentage of the information consumption fee to be paid when the advertisement information is consumed by the new member can be paid to the existing member who has attracted the new member, and transmits the generated subscription attraction fee information to the financial server 400 so that payment can be made to the member terminal 100 of the member who has attracted the new member's subscription.

As a result, it may be possible to increase the loyalty of the existing members, thereby minimizing the chum rate of the members.

Additionally, when a service use signal is received, the member information management unit 310 of the present invention may transmit information about the member terminal 100 of the member (an advertisement consumer or a general consumer) having requested the service use signal to the member terminal 100 of the member (an advertisement consumer) having registered the advertisement information so that a reservation for the member having requested the service use signal can be made.

The information consumption fee management unit 320 calculates the payment proportion corresponding to the information consumption fee to be paid when the consumption of the member is performed through the advertisement information displayed via the advertisement information display unit 120, calculates the payment proportion for each category classified by the advertisement information classification unit 220, and transmits information about the calculated payment proportion to the database 330 so that the information about the calculated payment proportion can be stored.

The information consumption fee management unit 320 is configured to, when a request signal for the information consumption fee payment proportion is transmitted from the advertisement information registration unit 210, transmit pre-calculated information consumption fee payment proportion to the subscription guide unit 110 of the member terminal 100.

Furthermore, when an information consumption fee request signal is transmitted from the member information management unit 310, the information consumption fee management unit 320 transmits the information consumption fee request signal to the financial server 400 so that a predetermined proportion corresponding to an information consumption fee can be transmitted to the member terminal 100.

Meanwhile, the financial server 400 of the present invention is configured to, when an information consumption fee request signal is transmitted, the payment proportion, calculated through the information consumption fee management unit 320, to the member terminal 100 having registered the advertisement information for which consumption has be performed. The financial server 400 of the present invention is additionally configured to, when the information consumption fee is paid from the member terminal 100, pay the information consumption fee to the member terminal 100 that has generated authentication information through the advertisement information.

Accordingly, it is obvious that in the case of a member who has registered advertisement information, there is incurred no additional cost upon the registration of the advertisement information and an information consumption fee corresponding to a predetermined proportion is paid only when consumption is performed through the registered advertisement information, thereby significantly reducing advertisement expenses.

However, the present invention is not limited thereto, and may be configured to receive a predetermined amount of deposit from the member terminal 100 of the member who has registered the advertisement information in advance and pay an information consumption fee corresponding to a pre-calculated proportion when the information consumption request signal is transmitted.
100: member terminal 110: subscription guide unit
120: advertisement information display unit 130: consumption authentication unit
140: advertisement and consumption information provision unit 200: advertisement platform server
210: advertisement information registration unit 220: advertisement information classification unit
230: advertisement information selection unit 240: advertisement information provision unit
300: member management server 310: member information management unit
320: information consumption fee management unit 330: database
400: financial server

## Claims

1. A system for providing an advertisement information platform service using a block chain, the system comprising:
a member terminal configured to allow a member, including an advertisement consumer and a general consumer, to subscribe for membership, to display advertisement information registered by the advertisement consumer, to generate authentication information for use of the advertisement information, and to receive or pay an information consumption fee corresponding to a predetermined proportion upon generation of the authentication information;
an advertisement platform server configured to allow advertisement information included in an advertisement information registration request signal to be registered when the advertisement information registration request signal is transmitted from the member terminal, to select defective advertisement information and non-defective advertisement information from the registered advertisement information by using a block chain, to remove only the defective advertisement information, and to transmit only the non-defective advertisement information to the member terminal;
a member management server configured to operate in conjunction with the member terminal and the advertisement platform server, to store information about the member and the advertisement information, and to generate an information consumption fee request signal so that an information consumption fee is paid to the member terminal upon reception of the authentication information; and
a financial server configured to receive the information consumption fee request signal from the member management server, and to pay the information consumption fee to the member terminal.

2. The system of claim 1, wherein the advertisement consumer plays a role of an advertiser who registers advertisement information for any one field, or additionally plays a role of a consumer who uses advertisement information in all fields including the any one field.

3. The system of claim 1, wherein the member terminal comprises:
a subscription guide unit configured to guide the member through subscription for membership, to generate an advertisement information registration request signal adapted to register advertisement information, and to transmit the advertisement information registration request signal to the member management server;
an advertisement information display unit configured to display advertisement information corresponding to the advertisement information registration request signal while operating in conjunction with the advertisement platform server;
a consumption authentication unit configured to, upon use of the advertisement information, generate authentication information including a service use payment completion signal and a consumer review message for the advertisement information and transmit the authentication information to the member management server, and to pay information consumption fee corresponding to a predetermined proportion corresponding to the authentication information or receive the information consumption fee corresponding to the predetermined; and
an advertisement and consumption information provision unit configured to classify the member as a member having registered the advertisement information or a member using the registered advertisement information, and to receive advertisement list information and information consumption fee list information from the member management server according to status of the classified member.

4. The system of claim 1, wherein the advertisement platform server comprises:
an advertisement information registration unit configured to receive an advertisement information registration request signal while operating in conjunction with the member terminal, and to transmit advertisement information included in the advertisement information registration request signal and payment proportion information for an information consumption fee calculated by the member management server;
an advertisement information classification unit configured to, upontransmission of the advertisement information registration request signal, analyze a category of the advertisement information and arrange the advertisement information according to a result of the analysis of the category;
an advertisement information selection unit configured to select the advertisement information, classified by the advertisement information classification unit, as defective advertisement information or non-defective advertisement information by using a block chain; and
an advertisement information platform provision unit configured to arrange the non-defective advertisement information in the category, and to provide the arranged non-defective advertisement information to the member terminal.

5. The system of claim 1, wherein the member management server comprises:
a member information management unit configured to generate the information consumption fee request signal, and to provide advertisement list information and information consumption fee list information upon a request from the member terminal;
an information consumption fee management unit configured to calculate the payment proportion for the information consumption fee, and to transmit the information consumption fee request signal to the financial server; and
a database configured to store information and data transmitted from the member information management unit and the information consumption fee management unit.

6. The system of claim 5, wherein the member information management unit is configured to allow the existing member to attract a new member, to generate subscription attraction fee information so that a predetermined proportion of an information consumption fee to be paid when the new member uses advertisement information is paid to the existing member having attracted the new member, and to transmit the generated subscription attraction fee information to the financial server so that the predetermined proportion of the information consumption fee is paid to the memberterminal of the member having attracted the new member.
